# EUROPEAN PATENT APPLICATION

(11) **EP 0 774 341 A2**
(43) Date of publication of application: **21.05.1997**
(21) Application number: 96116498.5
(22) Date of filing: 15.10.1996
(51) Int. Cl.: B31D 5/00, B65D 19/34

(54) **Lay-up system for pallets**

(30) Priority: 18.10.1995 US 565200
(71) Applicant: MARQUIP, INC., Phillips, Wisconsin 54555-0028 (US)
(72) Inventor: Marschke, Carl R., Phillips, WI 54555 (US)
(74) Representative: Beetz & Partner Patentanwälte

(57) **Abstract**

A pallet lay-up system utilizes a method in which spool-shaped paper supports wound with integral end flanges are processed in sequential linear arrays for adhesive attachment to first and second corrugated paperboard deck sheets applied in separate lay-up stations. The method may be readily modified, utilizing the same basic system, to manufacture a wide variety of pallet and pallet-like structures which include partial deck sheets, multi-layer deck sheets, and various combinations thereof.

## Description

### Background of the Invention

The present invention pertains to a system for making lightweight recyclable load-supporting pallets and, more particularly, to a system utilizing uniquely constructed wound paper supports which are attached to and separate the upper and lower pallet deck members.

For many years, the search for a replacement for conventional wood pallets has lead to the development of a wide variety of paper and paperboard pallets. Pallets made of paper or paperboard are generally considered to be much less costly to manufacture, more easily disposed of when damaged or destroyed, and potentially even recyclable. However, the inherent lower strength and durability of paper and paperboard, as compared to wood, has prevented the successful development of a fully functional, lightweight and recyclable paper pallet.

The following U.S. patents are representative of the prior art teaching the construction of paper and paperboard pallets: 2,388,730; 2,493,562; 2,691,499; 4,244,766; and, 4,850,284. The last of the foregoing patents describes a paperboard pallet in which deck members made from multi-layer corrugated paperboard include die cut fingers which are pushed into cylindrical solid paper tubes that provide the pallet legs or supports. The next to last of the foregoing patents describes a method of assembling pallets utilizing a similar construction.

Copending and commonly assigned U.S. patent application Serial No. 08/191,074, filed February 2, 1994, describes a method and apparatus for manufacturing recyclable paper pallets utilizing unique spool-shaped laminated supports which are wound from adhesive coated paper strips. The flanged spool-shaped supports are adhesively attached to upper and/or lower deck or skin sheets which may be constructed of corrugated paperboard, solid fiber board, paper, or wood-derivative hardboard materials.

The present invention is directed to a system for laying up pallets utilizing flanged paper supports of the type described in the above identified patent application.

### Summary of the Invention

In accordance with the method of the present invention, pallets are made by the method of winding adhesive-coated paper strips on flanged mandrels to form hollow laminated supports having integral end flanges; forming sequential linear arrays of the supports with each array comprising a row of spaced supports; moving the formed array of supports in the direction of linear formation into a first assembly station; adhesively attaching the end flanges of the support array to one planar face of a first rectangular deck sheet positioned in the first assembly station; advancing the first deck sheet incrementally through the first station in a direction transverse to the direction of linear formation to space the support array laterally thereof; and, repeating the foregoing steps to similarly attach a subsequent array of supports to the first deck sheet. The method of the present invention preferably also includes the steps of conveying the first deck sheet and attached support arrays into a second assembly station, and adhesively attaching one planar face of a second rectangular paperboard deck sheet to the other end flanges of at least one of the support arrays in the second station.

In a presently preferred embodiment, the first and second deck sheets are of generally the same size and shape and the second deck sheet is attached to the end flanges of all of the support arrays. The deck sheets preferably comprise thin paper skin sheets, solid fiber board sheets or corrugated paperboard sheets of either single or multi-wall construction. The upper deck sheet may comprise the bottom wall of a corrugated paperboard container.

### Brief Description of the Drawings

FIG. 1 is a schematic top plan view of a pallet lay-up system utilizing the method of the present invention.

FIG. 2 is a vertical section through a portion of the system taken on line 2-2 of FIG. 1.

FIG. 3 is a vertical section of a portion of the system taken on line 3-3 of FIG. 1.

FIG. 4 is a vertical section of a portion of the system taken on line 4-4 of FIG. 1.

FIG. 5 is a vertical section of a portion of the system taken on line 5-5 of FIG. 1.

FIGS. 6-8 are generally schematic perspective views of three embodiments of pallet-like articles made in accordance with the method of the present invention.

FIG. 9 is a side elevation of a pallet support of the type used in the method of the present invention.

FIG. 10 is a bottom plan view of the support shown in FIG. 9.

FIG. 11 is a vertical section taken on line 11-11 of FIG. 10.

FIGS. 12 and 13 are bottom plan views of pallet constructions utilizing the wound flanged supports and corrugated paperboard deck members.

FIGS. 14 and 15 are side elevation views of the pallets shown respectively in FIGS. 12 and 13.

### Detailed Description of the Preferred Embodiments

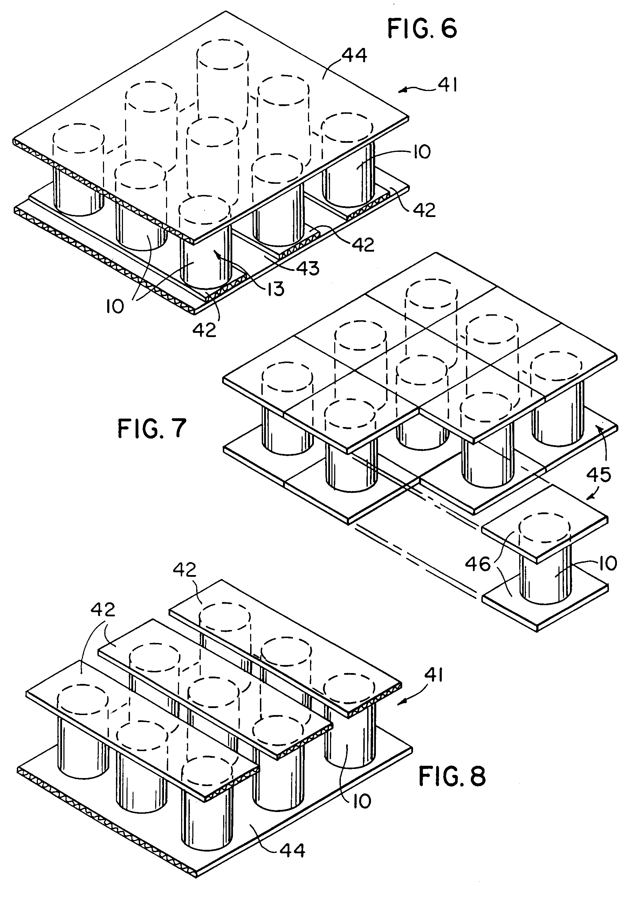

Pallets and pallet components of the various types shown in FIGS. 6-8 and 12-15 of the drawings may all be assembled in accordance with the method of the present invention. Further, all of the pallet products to be disclosed hereinafter utilize the unique spool-shaped laminated supports 10 shown in the drawing and described in the above identified co-pending U.S. patent application.

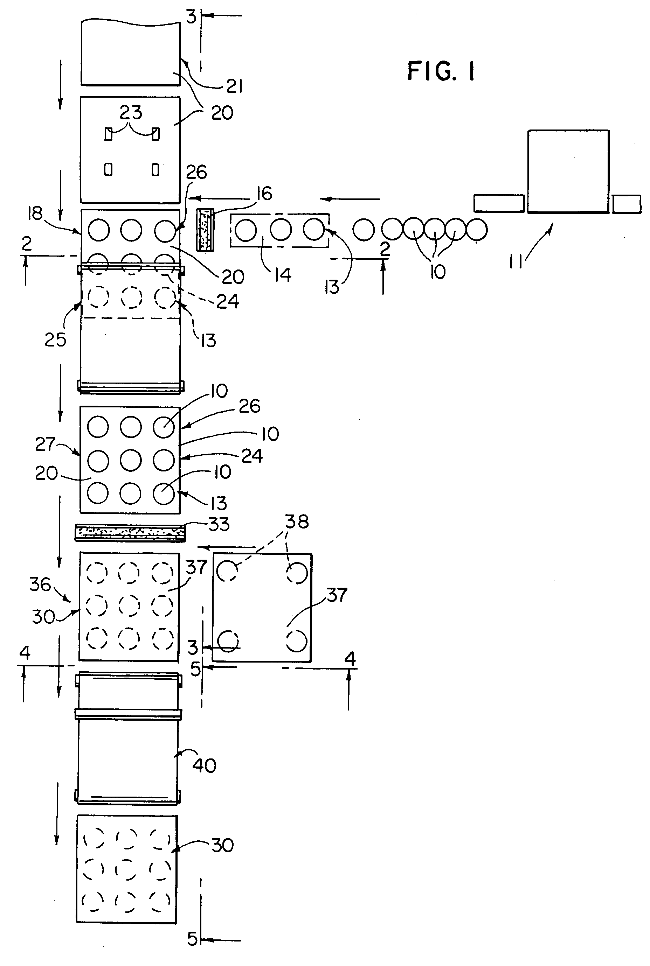

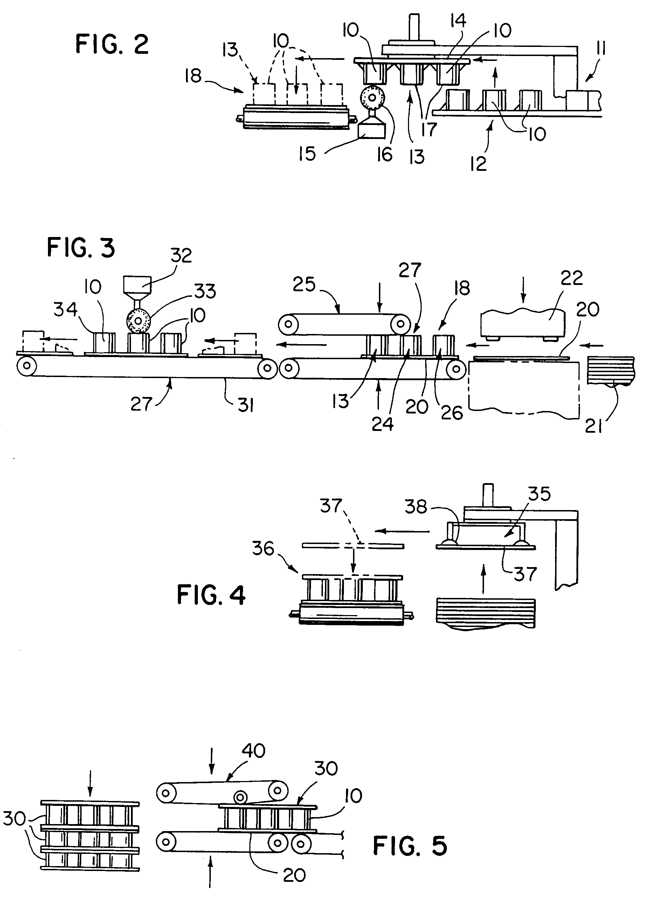

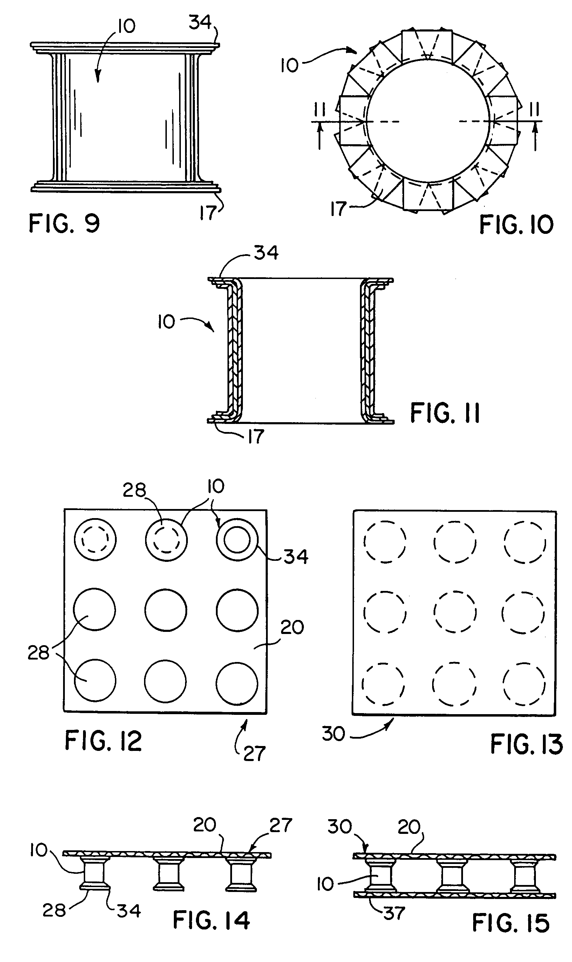

Referring to FIGS. 1 and 2, the hollow laminated pallet supports 10 are received from an upstream support manufacturing apparatus 11, such as described in the co-pending application, and delivered on an in-feed conveyor 12 for further processing in accordance with the method of this invention. A first linear array 13, comprising three supports 10, is picked off the in-feed conveyor 12 by a transfer device 14. The transfer device 14 carries the first array 13 over a first adhesive applicator 15 which includes an applicator wheel 16 that transfers a layer of adhesive to the bottoms of the lower flanges 17 of the supports 10. The support flanges are not specifically shown in the schematic representations in FIGS. 1-5, but are clearly depicted in several views in FIGS. 9-11.

The first linear array 13 of pallet supports continues to be conveyed in a horizontal direction by the transfer device 14 laterally into a first lay up station 18. Simultaneously, a first or lower paperboard deck sheet 20 is being fed from a sheet stack 21 into the first lay-up station 18 in a generally longitudinal direction with respect to the main flow through the lay-up process. Prior to movement of the first deck sheet 20 into the first lay-up station 18, the sheet may be die cut for example in a reciprocating die cutter 22, to provide a pattern of wheel openings 23 to facilitate use of the pallets of this invention with a pallet jack commonly used to move palletized loads.

The leading edge, for example about the first one-third of the length, of the deck sheet 20 is moved initially into the first lay-up station 18. The overhead transfer device 14 brings the first linear array 13 of supports into the first lay-up station and deposits them on the leading edge of the first deck sheet 20. Referring also to FIG. 3, the first deck sheet is then indexed to bring the next or middle third thereof into the first lay-up station 18 while a second linear array 24 of supports 10 has been picked up from the in-feed conveyor 12, carried over the adhesive applicator wheel 16 and brought into the lay-up station for deposit on the deck sheet 20.

As the deck sheet is indexed in the downstream direction with successive arrays of supports 10 applied thereto, the subassembly is moved into and carried downstream by a compression belt section 25 which assists in holding the supports 10 firmly in contact with the deck sheet while the adhesive cures. The third linear array 26 of supports 10 is picked up, glued, and transferred into the first lay-up station 18 in a similar manner and deposited onto the rear or upstream one-third of the first deck sheet 20 to complete the pallet processing in the first lay-up station.

At this point in the process, a fully functional single deck pallet 27 has been completed. This pallet 27 is shown in more detail in FIGS. 12 and 14 and might be used in relatively light load pallet applications. As shown in FIG. 14, the single deck pallet 27 is inverted in use and the lower ends of the supports 10 may be enclosed with circular end disks 28 which are glued to the exposed flanges 17, as shown in FIG. 12.

However, to complete the construction of a more conventional two deck pallet 30, as shown in detail in FIGS. 13 and 15, the single deck pallet 27 is moved from the compression belt section 25 onto an intermediate conveyor section 31 which carries the pallet and attached supports 10 under a second adhesive applicator 32 with the applicator wheel 33 positioned to apply adhesive coatings to the upper flanges 34 of the supports, as shown in FIG. 3. Referring also to FIG. 4, the glued single deck pallet 27 moves from the intermediate conveyor 31 into a second lay-up station 36 where it receives a second deck sheet 37 from a deck transfer apparatus 35. The deck transfer apparatus may include a lateral transfer arm with vacuum pick ups 38 which take the second deck sheets 37 off a stack one at a time and transfer the same into the second lay-up station. From the second lay-up station, the assembled two deck pallet 30 is transferred into a second compression belt section 40 which holds the assembly together until the glued interface between the upper flanges 34 and second deck sheet is cured. The second compression belt section also serves to eject the completed pallet 30 from the system where, for example, the pallets may be vertically stacked in a conventional downstacking apparatus, as shown in FIG. 5.

One pallet which is commonly used in industry in the United States has deck dimensions of 40" x 48" (102 cm x 122 cm). The deck sheets 20 and 37 may be made of a wide variety of paper paperboard, wood, or wood-derivative sheets, but preferably comprise sheets of conventional single wall corrugated paperboard. However, the deck sheets may also be made of double wall or triple wall board and, as is known in the prior art, a triple wall deck board may be constructed of three individual single wall boards with the intermediate board sheet rotated 90° with respect to the outer sheets so the flutes of the center board are oriented perpendicularly to the flutes of other two sheets. The compressive strength and the bending strength of corrugated paperboard is greater in the direction of the flutes defined by the corrugated medium. It is preferable, therefore, to orient the flutes in the direction of the long dimension of the pallet and, if the deck sheets are made from three corrugated sheets, to so orient the flutes of two of the three sheets. However, the method of the present invention may also be utilized to provide modified pallet constructions with enhanced strength benefits provided by cross flute orientation of multi-layer deck sheets without using a full multi-layer construction.

Referring to FIG. 6, for example, a modified pallet 41 (which is shown in a position inverted from its position in use) includes narrow corrugated strips 42 which are secured between each array 13 of supports 10 and the face of the deck sheet 43. The opposite deck sheet 44 may have the support arrays attached thereto in the manner previously described. The deck sheets 43 and 44 are oriented with the flutes of the corrugated medium extending in the direction of the long dimension (e.g. 48") of the pallet. The intermediate corrugated strips 42, on the other hand, are oriented with the flutes extending perpendicularly to those of the deck sheets or in the direction of the shorter pallet dimension (e.g. 40"). The corrugated strips provide additional compressive and bending strength in what are normally the weaker regions of the pallet. In use, the pallet 41 would be inverted so the corrugated strips 42 and deck sheet 43 define the load bearing upper surface of the pallet.

The pallet of FIG. 6 may be made in various ways using the basic method and lay-up system previously described. For example, the corrugated strips 42 could be fed individually into the first lay-up station 18 and an array 13 of supports attached thereto as described previously. Three successive strips 42 with supports attached are processed in appropriate spaced orientation through the compression belt section 25, receive a single deck sheet 37 in the second lay-up station 36, and finally processed through the second compression belt section 40. The partially completed modified pallet 41 (shown inverted in FIG. 8) could be recirculated through the system by inserting it upstream of the second adhesive applicator 32 to have adhesive applied to the outer faces of the corrugated strips 42, and the upper deck sheet 43 supplied thereto by the deck transfer apparatus 35 in the second lay-up station 36. Of course, the partially completed FIG. 8 pallet could be used as a fully functional pallet without the addition of the full upper deck sheet 43.

Many variations in the method of the present invention may be performed in the lay-up system to provide pallets or pallet-like structures of various shapes and load bearing capacities. Referring to FIG. 7, a conventional two deck pallet 30 of the type made in accordance with the method of the preferred embodiment could be cut to form a plurality of individual spools 45. Such spools could be used to wind a wide variety of continuous strip, tube, rope, or wire materials of many types. Alternately, the spools 45 could be fabricated individually in the previously described system using individual deck sheets 46. The spools could be processed one at a time or in laterally aligned rows of three, all in a manner similar to the method previously described.

The method of the present invention may also be modified to manufacture corrugated paperboard containers with pallets integrally attached to the bottom wall of the container. In such a construction, the container bottom wall would comprise the second deck sheet 37 and the deck transfer apparatus 35 would merely pick up and transfer the container, all in a manner previously described. The second compression belt section 40 would have to be modified or other apparatus provided to hold the container bottom wall (second deck sheet 37) onto the tops of the supports 10 to cure the adhesive.

## Claims

1. A method for making paper pallets comprising the steps of:
(1) providing hollow laminated paper supports having integral end flanges;
(2) forming sequential linear arrays of said supports, each array comprising a row of spaced supports;
(3) moving a first array of supports in the direction of linear formation into a first assembly station;
(4) adhesively attaching the end flanges of said first array to one planar face of a first rectangular deck sheet positioned in said first assembly station;
(5) advancing said first deck sheet incrementally through said first station in a direction transverse to said linear formation to space said first array laterally thereof; and,
(6) repeating steps (3) - (5) for a second array of supports.

2. The method as set forth in claim 1 comprising the steps of:
(1) conveying the first deck sheet and attached arrays of supports into a second assembly station; and,
(2) adhesively attaching one planar face of a second rectangular paperboard deck sheet to the other end flanges of at least one of said arrays of supports in the second station.

3. The method as set forth in claim 2 wherein said first and second deck sheets are of generally the same size and shape, and including the modified step of attaching the face of said second deck sheet to the other end flanges of all of said arrays.

4. The method as set forth in claim 2 wherein one of said first and second deck sheets comprises the bottom wall of a corrugated paperboard container.

5. The method as set forth in claim 2 including the step of cutting openings in one of the first and second paperboard deck sheets prior to positioning said sheet in the respective one of said first and second assembly stations.

6. The method as set forth in claim 1 wherein the step of providing hollow laminated paper supports comprises winding adhesive-coated paper strips on flanged mandrels.

7. The method as set forth in claim 1 comprising the step of providing a paperboard deck sheet.

8. A method for making pallet-like articles comprising the steps of:
(1) providing hollow laminated paper supports having integral end flanges;
(2) moving said supports sequentially into a first assembly station;
(3) moving a series of first paperboard deck sheets sequentially into said first assembly station;
(4) adhesively attaching one end flange of each support to one face of each deck sheet in the first assembly station;
(5) curing the adhesive and conveying the first deck sheet and attached support into a second assembly station; and,
(6) adhesively attaching one face of a second deck sheet to the other end flange in the second station.

9. The method as set forth in claim 8 including the step of providing first and second paperboard deck sheets.

10. A system for making paper pallets,
comprising (1) means (11) for providing hollow laminated paper supports having integral end flanges;
(2) means (12) for forming sequential linear arrays of said supports, each array comprising a row of spaced supports;
(3) means for moving a first array of supports in the direction of linear formation into a first assembly station;
(4) means (14, 15, 16, 18) for adhesively attaching the end flanges of said first array to one planar face of a first rectangular deck sheet (20) positioned in said first assembly station;
(5) means for advancing said first deck sheet incrementally through said first station in a direction transverse to said linear formation to space said first array laterally thereof; and
(6) means for commanding the repeated use of means (3) - (5).

11. A system for making pallet-like articles, comprising
(1) means (11)for providing hollow laminated paper supports having integral end flanges;
(2) means (12) for moving said supports sequentially into a first assembly station;
(3) means for moving a series of first paperboard deck sheets (20) sequentially into said first assembly station;
(4) means (14, 15, 16, 18) for adhesively attaching one end flange of each support to one face of each deck sheet in the first assembly station;
(5) means for curing the adhesive and conveying the first deck sheet and attached support into a second assembly station; and
(6) means for adhesively attaching one face of a second deck sheet to the other end flange in the second station.
